# EUROPÄISCHE PATENTANMELDUNG

(11) **EP 1 172 193 A1**
(43) Veröffentlichungstag der Anmeldung: **16.01.2002**
(21) Anmeldenummer: 00115214.9
(22) Anmeldetag: 13.07.2000
(51) Int. Cl.: B29C 45/16, B29C 45/14, H01R 43/24

(54) **Verfahren zur Herstellung eines Steckteils und Steckteil**

(71) Anmelder: Wippermann, Erich GmbH, 58553 Halver (DE)
(72) Erfinder: Lindner, Ulrich, Dipl.-Ing., 58566 Kierspe (DE); Oesterreich, Jürgen, Dipl.-Wirt.-Ing., 51645 Gummersbach (DE); Kaffenberger, Dieter, Dipl.-Ing., 51674 Wiehl (DE)
(74) Vertreter: Rohmann, Michael, Dr.

(57) **Zusammenfassung**

Verfahren zur Herstellung eines Steckteils, wobei ein Basisgehäuse mit zumindest einem sich parallel zur Steckrichtung erstreckenden Gehäusemantel erzeugt wird. Weiterhin wird zumindest eine über dem Gehäusemantel umlaufende und sich parallel zur Steckrichtung erstreckende Ringdichtung an dem Gehäusemantel fixiert. In einem ersten Verfahrensschritt wird das Basisgehäuse des Steckteils durch Spritzgießen mit einem ersten Spritzgusswerkzeug hergestellt. In einem zweiten Verfahrensschritt wird die Ringdichtung mit einem zweiten Spritzwerkzeug an dem Gehäusemantel angespritzt.

## Beschreibung

Die Erfindung betrifft ein Verfahren zur Herstellung eines Steckteils, wobei ein Basisgehäuse mit zumindest einem sich parallel zur Steckrichtung erstreckenden Gehäusemantel erzeugt wird, wobei weiterhin zumindest eine über dem Gehäusemantel umlaufende und sich parallel zur Steckrichtung erstreckende Ringdichtung an dem Gehäusemantel fixiert wird. Die Erfindung betrifft fernerhin ein Steckteil. - Bei dem Steckteil kann es sich grundsätzlich um ein feminines oder ein maskulines Steckteil, vorzugsweise aber um ein feminines Steckteil handeln. Nach sehr bevorzugter Ausführungsform handelt es sich um ein Steckteil für eine elektrische Steckverbindung. Es versteht sich, dass das Steckteil dann über elektrische Steckkontakte verfügt. Das Steckteil besteht im Wesentlichen aus Kunststoff, abgesehen von den vorzugsweise vorgesehenen metallischen elektrischen Steckkontakten. Zweckmäßigerweise umschließt der Gehäusemantel zumindest einen Hohlraum, wobei in dem Hohlraum nach bevorzugter Ausführungsform der Erfindung die elektrischen Steckkontakte aufgenommen sind. Der Gehäusemantel weist vorzugsweise einen kreisförmigen oder ovalen Querschnitt auf. Der Querschnitt des Gehäusemantels kann aber auch rechteckig ausgebildet sein. Grundsätzlich sind die verschiedensten Querschnittsformen des Gehäusemantels möglich. Die Ringdichtung weist eine dem Querschnitt des Gehäusemantels angepasste Form auf und ist somit vorzugsweise kreisförmig, oval oder rechteckig ausgeführt.

Die Ringdichtung dient zur Abdichtung eines sich parallel zur Steckrichtung des Steckteils erstreckenden Dichtbereiches. Dieser Dichtbereich liegt zwischen dem Gehäusemantel des Steckteils und einem Komplementärmantel eines mit diesem Steckteil zu verbindenden Komplementärsteckteils. Wenn es sich nach bevorzugter Ausführungsform der Erfindung um ein feminines Steckteil handelt, wird dementsprechend ein maskulines Komplementärsteckteil eingesteckt. Im eingesteckten Zustand dieses Komplementärsteckteils sind der Komplementärmantel und der Gehäusemantel des Steckteils bevorzugt parallel zueinander angeordnet und die Ringdichtung erstreckt sich vorzugsweise parallel zum Komplementärmantel und parallel zum Gehäusemantel in Steckrichtung. Die Ringdichtung wird beim Einstecken des Komplementärsteckteils zweckmäßigerweise elastisch verformt. Mit Hilfe der Ringdichtung soll der Bereich zwischen dem Gehäusemantel des Steckteils und dem Komplementärmantel des Komplementärsteckteils so abgedichtet werden, dass beispielsweise keine Feuchtigkeit an die metallischen elektrischen Steckkontakte gelangt.

Bei dem aus der Praxis bekannten Verfahren der eingangs genannten Art, von dem die Erfindung ausgeht, wird zunächst das Basisgehäuse mit dem Gehäusemantel separat hergestellt. In der Regel handelt es sich um ein Basisgehäuse mit einem inneren Gehäusemantel und einen den inneren Gehäusemantel mit Abstand umgebenden äußeren Gehäusemantel, wobei der Zwischenraum zwischen innerem und äußerem Gehäusemantel zur Aufnahme des Komplementärmantels eines Komplementärsteckteils dient. Im Rahmen des bekannten Verfahrens wird weiterhin eine Ringdichtung bzw. ein Dichtring separat hergestellt. Diese separat gefertigte Ringdichtung wird dann an dem Basisgehäuse montiert, indem sie formschlüssig um den inneren Gehäusemantel gelegt und fixiert wird. Dieses Verfahren ist relativ aufwendig. Im Übrigen genügt die Dichtwirkung der Ringdichtung nicht allen Anforderungen. Feuchtigkeit kann insbesondere an manchen Stellen zwischen Ringdichtung und innerem Gehäusemantel unkontrolliert durchdringen. Es versteht sich, dass dies mit beachtlichen Nachteilen verbunden ist, insbesondere wenn das Steckteil für eine elektrische Steckverbindung verwendet wird und die metallischen Steckkontakte von der Feuchtigkeit beaufschlagt werden.

Demgegenüber liegt der Erfindung das technische Problem zugrunde, ein Verfahren der eingangs genannten Art anzugeben, das sich durch Einfachheit und geringen Aufwand auszeichnet und mit dem ein Steckteil hergestellt werden kann, bei dem die Ringdichtung im Hinblick auf die Dichtigkeit allen Anforderungen genügt. Der Erfindung liegt fernerhin das technische Problem zugrunde, ein entsprechendes Steckteil anzugeben.

Zur Lösung dieses technischen Problems lehrt die Erfindung ein Verfahren der eingangs genannten Art, welches dadurch gekennzeichnet ist, dass in einem ersten Verfahrensschritt das Basisgehäuse des Steckteils durch Spritzgießen mit einem ersten Spritzgusswerkzeug hergestellt wird
und dass in einem zweiten Verfahrensschritt die Ringdichtung mittels eines zweiten Spritzwerkzeugs an den Gehäusemantel formschlüssig angespritzt wird. Die Ringdichtung wird also erfindungsgemäß durch Spritzgießen an dem bereits fertiggestellten Basisgehäuse erzeugt. Grundsätzlich kann also zunächst das Basisgehäuse durch Spritzgießen separat hergestellt werden und zeitunabhängig kann dann in einem völlig separaten zweiten Verfahrensschritt die Ringdichtung mit einem entsprechend ausgelegten zweiten Spritzwerkzeug an dem Gehäusemantel des Basisgehäuses angespritzt werden.

Nach sehr bevorzugter Ausführungsform der Erfindung wird in dem ersten Verfahrensschritt das Basisgehäuse mit einem inneren Gehäusemantel und einem mit Abstand dazu angeordneten äußeren Gehäusemantel sowie mit einer den inneren und den äußeren Gehäusemantel verbindenden Gehäuserückwand durch Spritzgießen hergestellt. Der äußere Gehäusemantel ist vorzugsweise parallel zum inneren Gehäusemantel angeordnet und sowohl der innere als auch der äußere Gehäusemantel erstrecken sich parallel zur Steckrichtung des Steckteils. Der innere Gehäusemantel umgibt zweckmäßigerweise die elektrischen Steckkontakte einer elektrischen Steckverbindung. Dabei weist der innere Gehäusemantel bevorzugt einen kreisförmigen oder ovalen Querschnitt auf. Er kann aber auch einen rechteckigen Querschnitt aufweisen. Es liegt im Rahmen der Erfindung, dass der äußere Gehäusemantel einen dem inneren Gehäusemantel entsprechenden Querschnitt zeigt. Es liegt fernerhin im Rahmen der Erfindung, dass der Zwischenraum zwischen dem inneren und dem äußeren Gehäusemantel nach vorne, d.h. steckseitig, offen ist und hinten durch die Gehäuserückwand abgeschlossen ist. Der Zwischenraum zwischen innerem und äußerem Gehäusemantel dient zur Aufnahme des Komplementärmantels eines in das Steckteil einzusteckenden Komplementärsteckteils. Wenn es sich nach bevorzugter Ausführungsform der Erfindung um Steckteile einer elektrischen Steckverbindung handelt, stehen im eingesteckten Zustand des Komplementärteils dessen elektrische Steckkontakte in leitender Wechselwirkung mit den Steckkontakten des Steckteils, die vorzugsweise von dem inneren Gehäusemantel umgeben werden.

Nach sehr bevorzugter Ausführungsform der Erfindung wird die Ringdichtung in dem zweiten Verfahrensschritt an der Außenseite des inneren Gehäusemantels formschlüssig angespritzt. Die Ringdichtung befindet sich somit im Zwischenraum zwischen dem inneren und dem äußeren Gehäusemantel und beim Einstecken des Komplementärmantels eines Komplementärsteckteils wird ein Bereich abgedichtet, der sich zwischen dem Komplementärmantel und dem inneren Gehäusemantel in Steckrichtung erstreckt. Es liegt im Rahmen der Erfindung, dass die Ringdichtung beim Einstecken des Komplementärsteckteils bzw. des Komplementärmantels elastisch verformt wird.

Nach sehr bevorzugter Ausführungsform der Erfindung wird in dem zweiten Verfahrensschrift schmelzflüssiges Dichtmaterial durch zumindest eine Öffnung in der Gehäuserückwand in den Zwischenraum zwischen innerem und äußerem Gehäusemantel zur Erzeugung der Ringdichtung eingespritzt. Das Basisgehäuse befindet sich dabei in einem geeigneten zweiten Spritzwerkzeug, das eine entsprechende Ausnehmung für die herzustellende Ringdichtung aufweist. Vorzugsweise ist in der Gehäuserückwand lediglich eine Öffnung zum Einbringen des schmelzflüssigen Dichtmaterials vorgesehen. Das Dichtmaterial kann mit Hilfe einer in die Öffnung eingebrachten Spritzdüse eingefüllt werden. Dabei wird zweckmäßigerweise die Ringdichtung an der Außenseite des inneren Gehäusemantels erzeugt.

Nach sehr bevorzugter Ausführungsform, der im Rahmen der Erfindung besondere Bedeutung zukommt, wird eine Ringdichtung mit zumindest einer außenseitig umlaufenden Dichtungslippe erzeugt. Vorzugsweise wird mehr als eine Dichtungslippe, insbesondere werden zwei bis vier Dichtungslippen, bevorzugt drei Dichtungslippen erzeugt. Dabei weist das zweite Spritzwerkzeug eine entsprechende Ausformung für die Dichtungslippe bzw. für die Dichtungslippen auf. Wenn nach bevorzugter Ausführungsform der Erfindung die Ringdichtung an der Außenseite des inneren Gehäusemantels erzeugt wird, ist die Dichtungslippe bzw. sind die Dichtungslippen dem äußeren Gehäusemantel zugewandt. Beim Einstecken eines Komplementärsteckteils wird die Dichtlippe bzw. werden die Dichtlippen elastisch verformt und diese elastische Formänderung trägt effektiv zur Dichtwirkung bei.

Es liegt im Rahmen der Erfindung, dass die Ringdichtung mit der Maßgabe an dem Gehäusemantel angespritzt wird, dass neben einer formschlüssigen Verbindung zwischen Ringdichtung und Gehäusemantel auch eine stoffschlüssige Verbindung verwirklicht wird. Mit anderen Worten findet beim Anspritzen der Ringdichtung eine chemische und/oder physikalische Wechselwirkung zwischen dem Material des Gehäusemantels einerseits und dem Material der Ringdichtung andererseits statt. Es liegt im Rahmen der Erfindung, dass die Materialien des Gehäusemantels einerseits und der Ringdichtung andererseits mit der Maßgabe ausgewählt werden, dass eine solche stoffschlüssige Verbindung zwischen Ringdichtung und Gehäusemantel realisiert werden kann.

Nach sehr bevorzugter Ausführungsform der Erfindung wird im ersten Verfahrensschritt zumindest ein Kunststoff aus der Gruppe "Polyamid, Polybutylenterephthalat (PBT), Polyethylenterephthalat (PET)" beim Spritzgießen für das Basisgehäuse eingesetzt. Der Kunststoff für das Basisgehäuse wird dabei mit der Maßgabe ausgewählt, dass er für das Spritzgießen im zweiten Verfahrensschritt ausreichend temperaturbeständig ist. Nach einer Ausführungsform der Erfindung ist der Kunststoff für das Basisgehäuse vorzugsweise bis 140°C temperaturbeständig. Wenn beim Spritzgießen des Werkstoffes (Dichtmaterial) für die Richtdichtung im zweiten Verfahrensschritt geringere Temperaturen als 140°C benötigt werden, kann jedoch auch ein Kunststoff für das Basisgehäuse ausgewählt werden, der bis zu entsprechenden Temperaturen unterhalb 140°C temperaturbeständig ist.

Eine sehr bevorzugte Ausführungsform ist dadurch gekennzeichnet, dass im zweiten Verfahrensschritt ein Silikon, dem vorzugsweise zumindest ein Haftvermittler zugesetzt ist, als Dichtmaterial für die Ringdichtung eingesetzt wird. Bei Verwendung eines Silikons mit zumindest einem Haftvermittler für die Ringdichtung wird eine effektive formschlüssige und zugleich stoffschlüssige Verbindung zwischen dem Gehäusemantel und der Ringdichtung verwirklicht. Grundsätzlich kann als Dichtmaterial für die Ringdichtung auch ein Standardsilikon ohne Haftvermittler verwendet werden. Dann erfolgt vorzugsweise eine Vorbehandlung der mit der Ringdichtung zu versehenden Oberfläche. Für diese Vorbehandlung wird bevorzugt eine Beflammung gewählt. Diese erfindungsgemäßen Ausführungsformen zeichnen sich durch besonders vorteilhafte Eigenschaften aus. Vorzugsweise wird als Haftvermittler zumindest ein Epoxy-Silan eingesetzt - Nach einer anderen bevorzugten Ausführungsform der Erfindung wird im zweiten Verfahrensschritt zumindest ein thermoplastisches Elastomer als Dichtmaterial für die Ringdichtung eingesetzt. Es liegt dabei im Rahmen der Erfindung, Polyetherblockamid mit Polycarbonat als Dichtmaterial für die Ringdichtung einzusetzen.

Die Erfindung betrifft weiterhin ein Steckteil, insbesondere für eine elektrische Steckverbindung, welches dadurch gekennzeichnet ist,
dass ein als Spritzgussteil ausgeführtes Basisgehäuse mit zumindest einem sich in Steckrichtung erstreckenden Gehäusemantel vorgesehen ist
und dass eine Spritzgussteil formschlüssig an dem Gehäusemantel angespritzte und über den Gehäusemantel umlaufende Ringdichtung vorgesehen ist. - Das Steckteil ist vorzugsweise dadurch gekennzeichnet, dass das Basisgehäuse einen inneren Gehäusemantel und einen den inneren Gehäusemantel mit Abstand umgebenden äußeren Gehäusemantel aufweist und dass die Ringdichtung an der Außenseite des inneren Gehäusemantels formschlüssig anliegt.

Der Erfindung liegt die Erkenntnis zugrunde, dass mit dem erfindungsgemäßen Verfahren ein Steckteil mit Ringdichtung auf relativ einfache Weise hergestellt werden kann. Das Basisgehäuse kann zunächst völlig separat von dem Einbringen der Ringdichtung durch Spritzgießen hergestellt werden. Zeit- und ortsunabhängig davon kann danach die Ringdichtung mit einem zweiten Spritzwerkzeug durch Spritzgießen eingebracht werden. Die erfindungsgemäß eingebrachte Ringdichtung zeichnet sich gegenüber den eingangs beschriebenen bekannten Maßnahmen durch ein überraschend hohe Dichtigkeit aus. Bei einer Verbindung eines erfindungsgemäßen Steckteils mit einem zugeordneten Komplementärsteckteil ist ein Feuchtigkeitsdurchlass durch den abgedichteten Bereich so gut wie ausgeschlossen. Eine erfindungsgemäße Ringdichtung, die zwischen einem Gehäusemantel und einem parallel dazu einzusteckenden Komplementärmantel angeordnet ist, unterliegt beim Herstellen und Lösen der Steckverbindung zwischen Steckteil und Komplementärsteckteil besonderen mechanischen Beanspruchungen. Mit der erfindungsgemäßen durch Spritzgießen hergestellten Ringdichtung wird eine mechanisch stabile Ringdichtung verwirklicht, die einerseits diesen mechanischen Beanspruchungen langfristig ohne weiteres standhält und auch nach häufigem Herstellen und Lösen der Steckverbindung eine optimale Dichtigkeit aufweist. Insoweit zeichnet sich die Ringdichtung durch beachtliche Vorteile aus.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf die Steckseite eines Basisgehäuses für das mit dem erfindungsgemäßen Verfahren hergestellte Steckteil,
- Fig. 2: einen Schnitt A-A durch den Gegenstand nach Fig. 1,
- Fig. 3: eine Rückansicht des Gegenstandes nach Fig. 1,

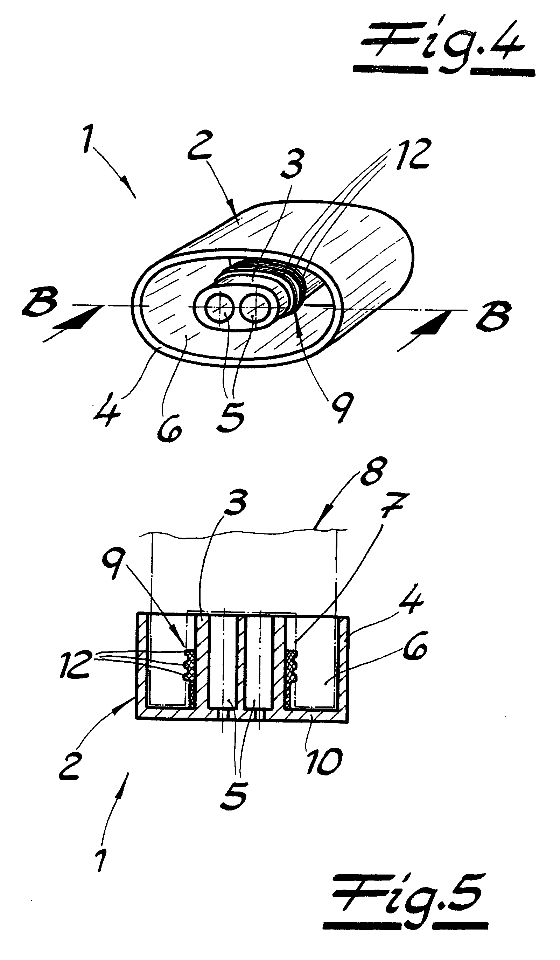

- Fig. 4: eine Draufsicht auf ein mit dem erfindungsgemäßen Verfahren hergestelltes Steckteil mit Ringdichtung und
- Fig. 5: einen Schnitt B-B durch den Gegenstand nach Fig. 4.

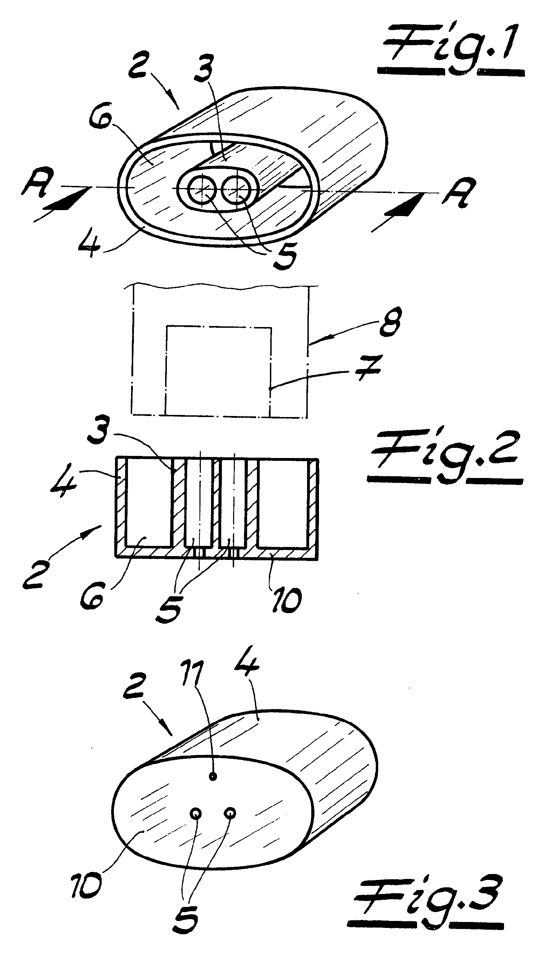

In den Figuren 1 bis 3 ist lediglich das Basisgehäuse 2 für ein erfindungsgemäßes Steckteil 1 dargestellt. Das Basisgehäuse 2 weist einen sich parallel zur Steckrichtung erstreckenden inneren Gehäusemantel 3 auf. Der innere Gehäusemantel 3 hat vorzugsweise und im Ausführungsbeispiel (Fig. 1) einen ovalen Querschnitt. Das Basisgehäuse 2 weist fernerhin ein den inneren Gehäusemantel 3 umgebenden und mit Abstand zu dem inneren Gehäusemantel 3 angeordneten äußeren Gehäusemantel 4 auf. Der äußere Gehäusemantel 4 weist im Ausführungsbeispiel ebenfalls einen ovalen Querschnitt auf.

Nach sehr bevorzugter Ausführungsform und im Ausführungsbeispiel ist das Steckteil 1 für eine elektrische Steckverbindung ausgelegt. Der innere Gehäusemantel 3 umgibt Hohlräume 5 die für nicht dargestellte elektrische Steckkontakte vorgesehen sind. Der Zwischenraum 6 zwischen dem inneren Gehäusemantel 3 und dem äußeren Gehäusemantel 4 ist für die Aufnahme eines Komplementärmantels 7 eines in das Steckteil 1 einzusteckenden Komplementärsteckteils 8 vorgesehen. Das Komplementärsteckteil 8 wurde in den Figuren 2 und 5 gestrichelt dargestellt. Beim Einstecken des Komplementärmantels 7 in den Zwischenraum 6 wird durch leitenden Kontakt der nicht dargestellten Steckkontakte des Steckteils 1 mit den ebenfalls nicht dargestellten Steckkontakten des Komplementärsteckteils 8 eine elektrische Verbindung hergestellt. - Das in den Fig. 1 bis 3 gezeigte Basisgehäuse wurde im Übrigen in einem separaten Verfahrensschritt durch Spritzgießen mit einem ersten nicht dargestellten ersten Spritzgusswerkzeug gefertigt.

Im eingesteckten Zustand des Komplementärsteckteils 8 muss insbesondere bei einer elektrischen Steckverbindung vermieden werden, dass Feuchtigkeit an die elektrischen Steckkontakte gelangt. Hierzu ist eine effektive Abdichtung zwischen dem Komplementärmantel 7 einerseits und dem inneren Gehäusemantel 3 andererseits erforderlich. Deshalb wird erfindungsgemäß an dem inneren Gehäusemantel 3 eine Ringdichtung 9 angebracht. Diese Ringdichtung 9 wird in einem zweiten separaten Verfahrensschritt mit einem nicht dargestellten zweiten Spritzwerkzeug an dem inneren Gehäusemantel 3 formschlüssig angespritzt. Vorzugsweise wird dabei das schmelzflüssige Dichtmaterial durch eine in der Gehäuserückwand 10 vorgesehene Öffnung 11 (Fig. 3) in den Zwischenraum 6 zwischen dem inneren Gehäusemantel 3 und dem äußeren Gehäusemantel 4 zur Erzeugung der Ringdichtung 9 eingespritzt. Dieses Einspritzen erfolgt, während sich das Basisgehäuse 2 in dem nicht dargestellten zweiten Spritzwerkzeug befindet, das eine entsprechende Ausnehmung für die Form der Ringdichtung 9 aufweist.

Vorzugsweise und im Ausführungsbeispiel ist die Ringdichtung 9 mit außenseitig umlaufenden Dichtungslippen 12 ausgestattet. Im Ausführungsbeispiel sind drei Dichtungslippen 12 vorgesehen. Beim Einstecken des Komplementärsteckteils 8 werden diese Dichtungslippen 12 von dem Komplementärmantel 7 beaufschlagt und sorgen für eine effektive Abdichtung zwischen Komplementärmantel 7 und innerem Gehäusemantel 3. - Vorzugsweise und im Ausführungsbeispiel besteht die Ringdichtung im Übrigen aus Silikon, dem ein Haftvermittler zugesetzt ist. Bei dieser Werkstoffauswahl wird neben der formschlüssigen Verbindung zwischen Ringdichtung 9 und innerem Gehäusemantel 3 zusätzlich eine sehr effektive stoffschlüssige Verbindung zwischen beiden Elementen erreicht.

## Patentansprüche

1. Verfahren zur Herstellung eines Steckteils (1),
wobei ein Basisgehäuse (2) mit zumindest einem sich parallel zur Steckrichtung erstreckenden Gehäusemantel (3, 4) erzeugt wird,
wobei weiterhin zumindest eine über den Gehäusemantel (3, 4) umlaufende und sich parallel zur Steckrichtung erstreckende Ringdichtung 9 an dem Gehäusemantel (3, 4) fixiert wird, **dadurch gekennzeichnet,**
**dass** in einem ersten Verfahrensschritt das Basisgehäuse (2) des Steckteils (1) durch Spritzgießen mit einem ersten Spritzgusswerkzeug hergestellt wird
und **dass** in einem zweiten Verfahrensschritt die Ringdichtung (9) mittels eines zweiten Spritzwerkzeugs an dem Gehäusemantel (3, 4) formschlüssig angespritzt wird.

2. Verfahren nach Anspruch 1, **dadurch gekennzeichnet, dass** in dem ersten Verfahrensschritt das Basisgehäuse (2) mit einem inneren Gehäusemantel (3) und einem mit Abstand dazu angeordneten äußeren Gehäusemantel (4) sowie mit einer den inneren und den äußeren Gehäusemantel (3, 4) verbindenden Gehäuserückwand (10) durch Spritzgießen hergestellt wird.

3. Verfahren nach Anspruch 2, **dadurch gekennzeichnet, dass** die Ringdichtung 9 in dem zweiten Verfahrensschritt an der Außenseite des inneren Gehäusemantels (3) formschlüssig angespritzt wird.

4. Verfahren nach einem der Ansprüche 2 oder 3, **dadurch gekennzeichnet, dass** schmelzflüssiges Dichtmaterial durch zumindest eine Öffnung in der Gehäuserückwand (10) in den Zwischenraum (6) zwischen innerem und äußerem Gehäusemantel (3, 4) zur Erzeugung der Ringdichtung 9 eingespritzt wird.

5. Verfahren nach einem der Ansprüche 1 bis 4, **dadurch gekennzeichnet, dass** eine Ringdichtung (9) mit zumindest einer außenseitig umlaufenden Dichtungslippe (12) erzeugt wird.

6. Verfahren nach einem der Ansprüche 1 bis 5, **dadurch gekennzeichnet, dass** im ersten Verfahrensschritt zumindest ein Kunststoff aus der Gruppe "Polyamid, Polybutylenterephthalat (PBT), Polyethylenterephthalat (PET)" beim Spritzgießen für das Basisgehäuse (2) eingesetzt wird.

7. Verfahren nach einem der Ansprüche 1 bis 6, **dadurch gekennzeichnet, dass** im zweiten Verfahrensschritt ein Silikon, dem vorzugsweise zumindest ein Haftvermittler zugesetzt ist, als Dichtmaterial für die Ringdichtung (9) eingesetzt wird.

8. Verfahren nach einem der Ansprüche 1 bis 6, **dadurch gekennzeichnet, dass** im zweiten Verfahrensschritt zumindest ein thermoplastisches Elastomer als Dichtmaterial für die Ringdichtung eingesetzt wird.

9. Steckteil, insbesondere für eine elektrische Steckverbindung, **dadurch gekennzeichnet, dass** ein als Spritzgussteil ausgeführtes Basisgehäuse (2) mit zumindest einem sich in Steckrichtung erstreckenden Gehäusemantel (3, 4) vorgesehen ist
und dass eine als Spritzgussteil formschlüssig an den Gehäusemantel (3, 4) angespritzte und über den Gehäusemantel (3, 4) umlaufende Ringdichtung (9) vorgesehen ist.

10. Steckteil nach Anspruch 9, **dadurch gekennzeichnet, dass** das Basisgehäuse (2) einen inneren Gehäusemantel (3) und einen den inneren Gehäusemantel (3) mit Abstand umgebenden äußeren Gehäusemantel (4) aufweist und dass die Ringdichtung (9) an der Außenseite des inneren Gehäusemantels (3) formschlüssig anliegt.

## Geänderte Patentansprüche

### Geänderte Patentansprüche gemäss Regel 86(2) EPÜ.

1. Verfahren zur Herstellung eines elektrischen Steckverbindungsteils (1) mit elektrischen Steckkontakten,
wobei ein Basisgehäuse (2) mit zumindest einem sich parallel zur Steckrichtung erstreckenden und die elektrischen Steckkontakte umgebenden Gehäusemantel (3, 4) erzeugt wird,
wobei weiterhin zumindest eine über den Gehäusemantel (3, 4) umlaufende und sich parallel zur Steckrichtung erstreckende Ringdichtung 9 an dem Gehäusemantel (3, 4) fixiert wird, **dadurch gekennzeichnet,**
**dass** in einem ersten Verfahrensschritt das Basisgehäuse (2) des Steckteils (1) durch Spritzgießen mit einem ersten Spritzgusswerkzeug hergestellt wird
und **dass** in einem zweiten Verfahrensschritt die Ringdichtung (9) mittels eines zweiten Spritzwerkzeugs an dem Gehäusemantel (3, 4) formschlüssig angespritzt wird.

2. Verfahren nach Anspruch 1, **dadurch gekennzeichnet, dass** in dem ersten Verfahrensschritt das Basisgehäuse (2) mit einem inneren Gehäusemantel (3) und einem mit Abstand dazu angeordneten äußeren Gehäusemantel (4) sowie mit einer den inneren und den äußeren Gehäusemantel (3, 4) verbindenden Gehäuserückwand (10) durch Spritzgießen hergestellt wird.

3. Verfahren nach Anspruch 2, **dadurch gekennzeichnet, dass** die Ringdichtung 9 in dem zweiten Verfahrensschritt an der Außenseite des inneren Gehäusemantels (3) formschlüssig angespritzt wird.

4. Verfahren nach einem der Ansprüche 2 oder 3, **dadurch gekennzeichnet, dass** schmelzflüssiges Dichtmaterial durch zumindest eine Öffnung in der Gehäuserückwand (10) in den Zwischenraum (6) zwischen innerem und äußerem Gehäusemantel (3, 4) zur Erzeugung der Ringdichtung 9 eingespritzt wird.

5. Verfahren nach einem der Ansprüche 1 bis 4, **dadurch gekennzeichnet, dass** eine Ringdichtung (9) mit zumindest einer außenseitig umlaufenden Dichtungslippe (12) erzeugt wird.

6. Verfahren nach einem der Ansprüche 1 bis 5, **dadurch gekennzeichnet, dass** im ersten Verfahrensschritt zumindest ein Kunststoff aus der Gruppe "Polyamid, Polybutylenterephthalat (PBT), Polyethylenterephthalat (PET)" beim Spritzgießen für das Basisgehäuse (2) eingesetzt wird.

7. Verfahren nach einem der Ansprüche 1 bis 6, **dadurch gekennzeichnet, dass** im zweiten Verfahrensschritt ein Silikon, dem vorzugsweise zumindest ein Haftvermittler zugesetzt ist, als Dichtmaterial für die Ringdichtung (9) eingesetzt wird.

8. Verfahren nach einem der Ansprüche 1 bis 6, **dadurch gekennzeichnet, dass** im zweiten Verfahrensschritt zumindest ein thermoplastisches Elastomer als Dichtmaterial für die Ringdichtung eingesetzt wird.

9. Elektrisches Steckverbindungsteil, **dadurch gekennzeichnet, dass** ein als Spritzgussteil ausgeführtes Basisgehäuse (2) mit zumindest einem sich in Steckrichtung erstreckenden Gehäusemantel (3, 4) vorgesehen ist
und dass eine als Spritzgussteil formschlüssig an den Gehäusemantel (3, 4) angespritzte und über den Gehäusemantel (3, 4) umlaufende Ringdichtung (9) vorgesehen ist.

10. Steckteil nach Anspruch 9, **dadurch gekennzeichnet, dass** das Basisgehäuse (2) einen inneren Gehäusemantel (3) und einen den inneren Gehäusemantel (3) mit Abstand umgebenden äußeren Gehäusemantel (4) aufweist und dass die Ringdichtung (9) an der Außenseite des inneren Gehäusemantels (3) formschlüssig anliegt.
